# EUROPÄISCHE PATENTSCHRIFT

(11) **EP 3 514 639 B1**
(45) Veröffentlichungstag und Bekanntmachung des Hinweises auf die Patenterteilung: **01.03.2023**
(21) Anmeldenummer: 18152039.6
(22) Anmeldetag: 17.01.2018
(51) Int. Cl.: G05B 19/418, B65G 43/00, B65G 61/00

(54) **VERFAHREN ZUR PALETTIERUNG VON IN EINER BEARBEITUNGSMASCHINE BEARBEITETEN TEILEN**
METHOD OF PALLETIZING OF MACHINED PARTS IN A PROCESSING MACHINE
PROCÉDÉ DE PALETTISATION DE PIÈCES TRAVAILLÉES DANS UNE MACHINE D'USINAGE

(43) Veröffentlichungstag der Anmeldung: 24.07.2019
(73) Patentinhaber: TRUMPF Werkzeugmaschinen GmbH + Co. KG, 71254 Ditzingen (DE)
(72) Erfinder: Wilhelm, Markus, 70839 Gerlingen (DE)
(74) Vertreter: Mammel und Maser Patentanwälte PartG mbB

(56) Entgegenhaltungen:
- WO-A1-2014/139761
- WO-A1-2017/162497
- DE-T2- 69 924 220
- US-A- 5 249 131

## Beschreibung

Die Erfindung betrifft ein Verfahren zum Palettieren von in einer Bearbeitungsmaschine bearbeiteten Teilen, die in einem oder in mehreren Entladebereichen, die der Bearbeitungsmaschine zugeordnet sind, abgelegt werden.

Aus der DE 699 24 220 T2 ist eine Klassifikationseinheit zur Aufnahme, zum Transport und zur Klassifizierung von bearbeiteten Werkstücken in einem Laserstrahlbearbeitungssystem bekannt. Die Werkstücke werden mit einem Laserstrahl bearbeitet und geschnitten. Benachbart zu den Laserstrahlgeräten zum Schneiden der Werkstücke ist eine Mehrzahl von Klassifikationsköpfen vorgesehen, um die bearbeiteten Werkstücke zu lokalisieren. Vor dem Ablegen der Werkstücke in einer Ablageposition werden bestimmte Parameter der Werkstücke, wie beispielsweise Form und Schwerpunkt, bestimmt, um die Werkstücke sicher zu handhaben sowie auf einer Palette abzulegen. Ein Operator gibt immer wieder Daten ein, um eine sichere Handhabung zu ermöglichen.

Aus der WO 2014/139761 A1 ist ein Verfahren zum Betreiben einer Plattenbearbeitungsanlage sowie eine Plattenbearbeitungsanlage und ein Verfahren zum Palettieren von Teilen bekannt. Bei diesem Verfahren werden charakteristische Parameter eines bearbeiteten Werkstücks ermittelt. Darauffolgend wird eine Soll-Position und eine Soll-Ausrichtung auf einer Palette für das bearbeitete Werkstück anhand von den ermittelten charakteristischen Parametern sowie abhängig von vorgegebenen Optimierungsparametern ermittelt, um darauffolgend Informationen bezüglich der Soll-Position und der Soll-Ausrichtung des Werkstücks auf der Palette auszugeben.

Aus der DE 10 2016 013 497 A1 ist eine Palettierung von einer Mehrzahl von Gegenständen in Kistenform auf eine Lagerfläche einer Palette bekannt. Über ein Förderband werden aufeinanderfolgend die Gegenstände in Kistenform, die vom Typ beziehungsweise der Größe auch voneinander abweichen können, in einer Entnahmeposition auf dem Förderband und zu einer Handhabungseinrichtung ausgerichtet positioniert. Mittels einer an der Handhabungseinrichtung angeordneten Kamera wird der Typ des Gegenstandes erfasst. Darauffolgend wird mittels der Handhabungseinrichtung der Gegenstand ergriffen und auf der Lagerfläche der Palette abgelegt oder in einem benachbarten Zwischenlager positioniert. Die Entscheidung, ob der in der Entnahmestation zu greifende Gegenstand auf die Lagerfläche übergeführt wird oder in der Zwischenablage zwischengespeichert wird, erfolgt über eine Datenverarbeitungsanlage mit einem Rechenalgorithmus, der eine optimale Ausnutzung des Lagervolumens auf der Palette errechnet. Dabei werden jeweils die Daten des Gegenstandes vor dem Ergreifen mit der Handhabungseinrichtung und vor dem Überführen auf die Lagerfläche oder das Zwischenlager berechnet.

Aus der WO 95/34865 A1 ist eine Bearbeitungsanlage bekannt, welche zur Bearbeitung von plattenförmigen Materialien, wie beispielsweise Blechen, vorgesehen ist. In einer Beladestation werden eine oder mehrere plattenförmige Materialien bereitgestellt, die über eine Handhabungseinrichtung einer Bearbeitungsmaschine der Bearbeitungsanlage zugeführt werden. In dieser Bearbeitungsmaschine werden unterschiedliche Teile mit unterschiedlichen Materialien bearbeitet. Da diese Teile in der Menge und der Qualität sowie deren Größe der Maschinensteuerung bekannt sind, wird eine Sortierung errechnet, um eine Ablage der Bauteile in einem Entladebereich zu optimieren. Dabei müssen das jeweilige Programm zur Bearbeitung der Teile abgearbeitet, die Paletten zur Aufnahme der Teile bereitgestellt und nach Ende des Programms auch getauscht werden. Die Unterbrechung des Programms, um ein höher priorisiertes Programm zur Herstellung von Teilen durchzuführen, erfordert einen manuellen Eingriff des Werkers, um den Entladebereich für das neue Programm umzurüsten.

Der Erfindung liegt die Aufgabe zugrunde, ein Verfahren zur Palettierung von Teilen, die in einer Bearbeitungsmaschine bearbeitet werden, in einem oder mehreren der Bearbeitungsmaschine zugeordneten Entladebereiche vorzuschlagen, welches vollautomatisch durchgeführt wird.

Diese Aufgabe wird durch ein Verfahren zur Palettierung von in einer Bearbeitungsmaschine bearbeiteten Teilen gelöst, bei dem das aus der Bearbeitungsmaschine zu entladende Teil mit einer Greifeinrichtung ergriffen wird, die Greifeinrichtung mit dem Teil in einen Entladebereich verfahren und an einem Ablageort in dem Entladebereich positioniert wird, wobei vor oder während dem Überführen des Teils in den Entladebereich die im Entladebereich verfügbare Lagerfläche mit zumindest einer Erfassungseinrichtung erfasst wird und die erfassten Daten über die verfügbare Lagerfläche an eine Datenverarbeitungseinrichtung in einer Steuerungseinrichtung der Bearbeitungsmaschine weitergeleitet werden und in der Datenverarbeitungseinrichtung diese erfassten Daten über die verfügbare Lagerfläche mit zumindest einem Parameter des zu palettierenden Teils durch einen Palettieralgorithmus ausgewertet und der Ablageort bestimmt wird und die Greifeinrichtung durch die Steuerungseinrichtung zum ermittelten Ablageort im Entladebereich verfahren und das Teil auf der Lagerfläche oder einem bereits palettierten Teil abgelegt wird. Durch dieses Verfahren wird die Lagerfläche in dem oder den Entladebereichen, die der Bearbeitungsmaschine zugeordnet sind, vor dem Ablegen des palettierenden Teils abgefragt, um daraufhin durch den Palettieralgorithmus eine Lagerposition für das abzulegende Teil zu bestimmen. Dadurch kann eine platzsparende und optimierte Palettierung von mehreren Teilen auf der Lagerfläche in dem oder den Entladebereichen ermöglicht sein. Diese Palettierung kann unabhängig von einem Programmdurchlauf beziehungsweise einem Bearbeitungsprogramm zur Bearbeitung von Teilen in der Bearbeitungsmaschine erfolgen. Darüber hinaus kann durch diese Verfahrensweise auch eine Sortierung der Teile bei der Palettierung erfolgen, indem beispielsweise zwei oder mehrere Lagerflächen in dem oder den Entladebereichen vorgesehen sind und die Teile nach den vorbestimmten Sortierkriterien auf eine bestimmte Lagerfläche abgelegt werden.

Bevorzugt wird der Entladebereich mit zumindest einer Erfassungseinrichtung erfasst, die auf den Entladebereich gerichtet ist, um die verfügbare Lagerfläche zu ermitteln.

Bevorzugt ist die zumindest eine Erfassungseinrichtung stationär zum Entladebereich ausgerichtet. Bevorzugt ist eine vollständige Erfassung der Lagerfläche oder Lagerflächen in dem zumindest einen Entladebereich durch die zumindest eine Erfassungseinrichtung vorgesehen. Dadurch kann ohne Eingriff eines Werkers eine vollständige Überwachung ermöglicht sein. Die verfügbare Ladefläche kann sowohl eine freie Fläche auf einer Palette, eines Podests oder eines Wagens sein als auch auf einem bereits abgelegten Teil oder einem Stapel von Teilen auf der Lagerfläche, wobei vorzugsweise die maximale Stapelhöhe der Teile noch nicht erreicht ist.

Bevorzugt werden die zumindest eine Erfassungseinrichtung vertikal von oben auf die Lagerfläche weisend und/oder die zumindest eine weitere Erfassungseinrichtung seitlich zum Entladebereich, vorzugsweise parallel zur Lagerfläche, ausgerichtet. Durch die vertikal von oben zum Entladebereich ausgerichtete zumindest eine Erfassungseinrichtung kann die Belegung der Lagerfläche durch bereits abgelegte Teile erfasst werden. Insbesondere können noch freie Lagerflächen ermittelt werden, die in Abhängigkeit der Geometrie der Teile noch belegt werden können.

Durch diese zumindest eine weitere, seitlich zum Entladebereich ausgerichtete Erfassungseinrichtung kann eine Stapelhöhe erfasst werden. Die Stapelhöhe auf einer Lagerfläche kann durch das die Lagerfläche aufnehmende Gesamtgewicht beschränkt sein. Auch können weitere Beschränkungen in der Stapelhöhe für den Transport der Paletten, Wägen, Podeste oder dergleichen bestimmt werden. Sofern ein Stapel von Teilen auf der Lagerfläche durch die zumindest eine seitlich zum Entladebereich ausgerichtete Messeinrichtung durch einen neu hinzu palettierten Stapel verdeckt sein sollte, kann dieser durch die Messeinrichtung nicht mehr erfasst werden. Da jedoch durch den Palettieralgorithmus die letzte erreichte Höhe des Stapels erfasst wurde, kann davon ausgehend die tatsächliche Stapelhöhe nach Ablage von einem oder mehreren weiteren Teilen berechnet werden, da die Materialdicke als Parameter im Palettieralgorithmus berücksichtigt wird.

Des Weiteren wird bevorzugt eine optische oder sensorische Messeinrichtung als Erfassungseinrichtung eingesetzt. Bei den optischen Messeinrichtungen können bevorzugt Kameras, insbesondere CCD-Kameras, eingesetzt werden. Bei sensorischen Messeinrichtungen kann dies beispielsweise ein Abstandssensor oder ein Laserentfernungsmessgerät oder dergleichen sein. Auch ein Radar ist als Erfassungsgerät einsetzbar.

Durch die zumindest eine Erfassungseinrichtung kann in einfacher Weise sowohl eine freie Lagerfläche, wie beispielsweise auf einer Transportpalette, auf einem Palettierwagen, auf einem Podest oder dergleichen, erfasst werden, um daraufhin über den zumindest einen Parameter des Palettieralgorithmus auszuwerten, ob dieses Teil auf der verfügbaren Lagerfläche abgelegt wird. Des Weiteren kann durch eine solche Erfassungseinrichtung eine Stapelhöhe von bereits übereinander gestapelten Teilen erfasst werden und eine Auswertung erfolgen, ob auf diesem Stapel noch weitere Teile abgelegt werden können.

Des Weiteren kann bevorzugt durch die Kombination einer Messeinrichtung, die auf den Entladebereich gerichtet ist und zumindest eine Messeinrichtung, die seitlich zum Entladebereich ausgerichtet ist, auch eine Neigung des Stapels oder eines abrutschenden Teils oder auch eine gegebenenfalls erfolgende Kollision ermittelt werden. Dadurch kann die Sicherheit beim Palettieren von Teilen auf der Lagerfläche überwacht und erhöht werden.

Des Weiteren kann bevorzugt bei einer erfassten Stapelhöhe von Teilen auf einer Lagerfläche, die zu einer Kollision mit der Greifeinrichtung beim Ablegen des zu palettierenden Teils benachbart zum Stapel, dessen Stapelhöhe erfasst wurde, führt, durch den Palettieralgorithmus die Greifeinrichtung zum Abwerfen des Teils oberhalb der vorgesehenen Lagerfläche angesteuert werden. Dadurch kann eine Kollision vermieden und dennoch das zur Verfügung stehende Lagervolumen vollständig ausgenutzt werden. Solche abgeworfenen Teile können sowohl auf einer frei verfügbaren Lagerfläche oder bereits auf einem Stapel von Teilen aufliegen.

Des Weiteren können bevorzugt für den Palettieralgorithmus als Parameter die Materialdaten der zu palettierenden Teile, die zu erwartende Gesamt-Teilestückzahl je Programmdurchlauf, das Teilegewicht, die zu erwartende Produktionszeit des jeweiligen Teils und/oder aus Daten des Bearbeitungsprogramm bereitgestellt werden. Dadurch kann eine verbesserte Palettierung der Teile erfolgen, durch welche die Anzahl der zu stapelnden Teile je Lagerfläche erhöht sein kann. Gleichzeitig kann dadurch auch eine weitere Prozessoptimierung erfolgen, indem beispielsweise aus den Daten des Bearbeitungsprogrammes für das jeweilige Teil die Wechselzeit für eine Palette, einen Wagen, einen Podest mit jeweils einer Lagerfläche ermittelt werden kann.

Eine weitere bevorzugte Ausführungsform des Verfahrens sieht vor, dass zu Beginn eines Programmdurchlaufs oder bei einem Wechsel des Programmdurchlaufs für die Bearbeitung des oder der Teile in der Bearbeitungsmaschine die im Entladebereich verfügbare Lagerfläche erfasst und darauffolgend das weitere Abstapeln der Teile rechnerisch bestimmt wird. Dadurch kann bei einer Änderung eines Programmdurchlaufs, insbesondere beim Einspielen eines neuen Programmdurchlaufs, beispielsweise aufgrund dessen höheren Priorität zur Herstellung von Teilen, ein umgehender Start des neuen Programmdurchlaufes erfolgen, ohne dass ein Eingriff eines Werkers oder Programmierers erforderlich wird. Das Verfahren zum Palettieren von Teilen in dem zumindest einen Entladebereich ist unabhängig von dem Programmdurchlauf für die Bearbeitung des oder der Teile in der Bearbeitungsmaschine. Dadurch kann der Programmdurchlauf wahlweise gewechselt werden, ohne dass dabei das Abstapeln von Teilen und/oder der Füllstand im Entladebereich in Abhängigkeit vom Programmdurchlauf steht.

Des Weiteren können nach jeder Unterbrechung eines Programmdurchlaufs die verfügbare Lagerfläche im Entladebereich durch die zumindest eine Messeinrichtung erfasst und die Prozesssicherheit erhöht werden. Während einer Unterbrechung kann eine Lagerfläche ausgewechselt werden oder es können nur einzelne Teile von der Lagerfläche entnommen worden sein, sodass sich der Zustand im Entladebereich nach der Unterbrechung des Programmdurchlaufs gegenüber dem Zustand vor der Unterbrechung geändert hat. Durch die erneute Erfassung kann die Palettierung wiederum an die aktuelle Situation angepasst und fortgeführt werden.

Bevorzugt werden im Entladebereich mehrere Lagerflächen bereitgestellt und die zu palettierenden Teile auf die einzelnen Lagerflächen nach Größe, Kundenauftrag und/oder nach Priorität zur Auslieferung und/oder nach Gut- und Fehlerteilen sortiert. Dadurch kann eine weitere Prozessoptimierung erzielt werden.

Des Weiteren kann der Ablageort des oder der Teile innerhalb der Lagerfläche im Entladebereich durch eine Schachtellogik über ein das Teil umschließendes Rechteck oder über eine das Teil Umhüllende in dem Palettieralgorithmus bestimmt werden. Die Umhüllende umgibt bevorzugt die Außenkontur des Teils. In diesem Fall gibt die Geometrie oder die Außenkontur des Teils die Größe des erforderlichen Ablageortes vor. Dadurch kann in Abhängigkeit der Geometrie der Teile eine optimierte Verpackungsdichte von benachbarten Teilen auch innerhalb der Lagerfläche erzielt werden.

Des Weiteren wird bevorzugt vor dem Ablegen des Teils am Ablageort der Lagerfläche die Orientierung erfasst und in der Bearbeitungsmaschine oder durch die Greifeinrichtung gedreht und ausgerichtet. Durch diese Prüfung und einer darauffolgend gegebenenfalls erfolgenden Drehung des Teils kann wiederum eine erhöhte Bestückung der Teile auf einer Lagerfläche ermöglicht sein, sodass dadurch eine erhöhte Packungsdichte der Teile auf der Lagerfläche ermöglicht wird.

Vorteilhafterweise werden die Teile aus der Bearbeitungsmaschine hauptzeitparallel entnommen und im Entladebereich palettiert. Insbesondere in Nachtschichten, in denen kein Bedienpersonal/Werker zur Verfügung steht, um die Teile von der Lagerfläche abzusortieren, kann nur bis zur Kapazitätsgrenze der zur Verfügung stehenden Entladebereiche gearbeitet werden. Die hauptzeitparallele Verdichtung ermöglicht einen Aufschub des Produktionsstops. Die Steuerung des Palettenalgorithmus kann den Produktionsplan dahingehend steuern, dass kleinere Teile, welche in Freiflächen zwischen größere Teile passen, vorgezogen werden.

Des Weiteren wird bevorzugt das Palettieren von Teilen unabhängig eines Programmdurchlaufs zur Bearbeitung von Teilen angesteuert. Unter einem Programmdurchlauf wird eine Arbeitsanweisung der Bearbeitungsmaschine verstanden, durch welche die Bearbeitungsmaschine eine oder mehrere plattenförmige Werkstücke bearbeitet, um daraus eine vorbestimmte Anzahl von Teilen herzustellen. Hierbei kann es sich um die Herstellung von Gleichteilen, aber auch von verschiedenen, in der Größe und/oder Form abweichenden Teilen, handeln. Durch die Erfassung der verfügbaren Lagerfläche in dem Entladebereich kann eine Palettierung von Teilen auch unabhängig des Programmdurchlaufes erfolgen. Bislang war die Palettierung vom Programmdurchlauf abhängig, da im Programmdurchlauf auch die Palettieranweisung anhand der Daten der zu bearbeitenden Teile geknüpft war.

Die Erfindung sowie weitere vorteilhafte Ausführungsformen und Weiterbildungen derselben werden im Folgenden anhand der in den Zeichnungen dargestellten Beispiele näher beschrieben und erläutert. Die der Beschreibung und den Zeichnungen zu entnehmenden Merkmale können einzeln für sich oder zu mehreren in beliebiger Kombination erfindungsgemäß angewandt werden. Es zeigen:
Figur 1 eine perspektivische Ansicht einer Bearbeitungsanlage,
Figur 2 ein schematisches Ablaufdiagramm zum automatischen Palettieren von Teilen in dem Entladebereich,
Figuren 3 und 4 schematische Ansichten für eine Schachtelung von Teilen mit einer Schachtellogik auf Basis eines umschließenden Rechtecks, und
Figuren 5 und 6 schematische Ansichten für eine Schachtelung von Teilen mit einer Schachtellogik auf Basis einer Umhüllenden.

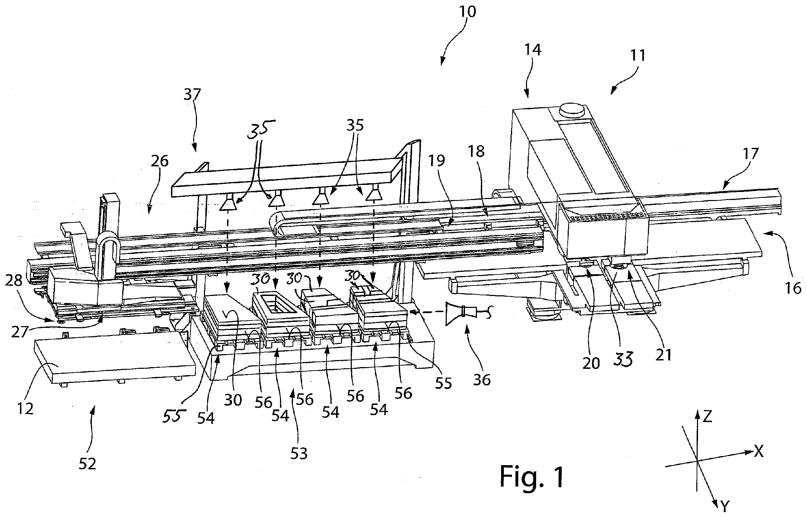

In Figur 1 ist perspektivisch eine beispielhafte Ausführungsform einer Bearbeitungsanlage 10 dargestellt. Diese Bearbeitungsanlage 10 umfasst eine Bearbeitungsmaschine 11, welche beispielsweise eine Hybridbearbeitungsmaschine ist. Diese Hybridbearbeitungsmaschine ermöglicht sowohl eine Laserbearbeitung als auch eine Stanzbearbeitung von plattenförmigen Werkstücken 12. Alternativ kann diese Bearbeitungsmaschine 11 auch nur eine Laserbearbeitungsmaschine oder nur eine Stanzbearbeitungsmaschine sein. Auch kann es sich bei der Bearbeitungsmaschine 11 um eine Laserflachbettmaschine oder eine Biege- oder Umformmaschine handeln. Diese Bearbeitungsmaschinen gemäß dem Ausführungsbeispiel weisen einen Grundkörper 14 auf, der als ein U-förmiger Rahmen ausgebildet ist. Alternativ kann eine solche Bearbeitungsmaschine auch einen geschlossenen umlaufenden Rahmen als Grundkörper umfassen. Dieser Grundkörper 14 erstreckt sich vorzugsweise in Y-Richtung. Diesen U-förmigen Grundkörper 14 durchquert eine Werkstückauflage 16, welche sich in X-Richtung erstreckt. Parallel zur Werkstückauflage 16 erstreckt sich eine Halteeinrichtung 17, welche vorzugsweise Klammern 18 umfasst. Durch diese Klammern 18 kann das plattenförmige Werkstück 12 gehalten und beispielsweise in X-Richtung der Werkstückebene (X/Y-Ebene) verfahren werden. Ebenso kann auch eine Verfahrbewegung in Y-Richtung angesteuert werden.

Bei einer Bearbeitungsmaschine mit einem geschlossenen Rahmen kann ein Laserbearbeitungskopf 20 und/oder ein Stanzbearbeitungskopf 21 entlang der Y-Achse innerhalb des Rahmens verfahren werden. Sofern die Bearbeitungsmaschine 11 einen Laserbearbeitungskopf 20 aufweist, ist in der Werkstückauflage 16 eine Auffangvorrichtung vorgesehen, welche unterhalb des Laserbearbeitungskopfes 20 vorgesehen ist.

Sofern die Bearbeitungsmaschine 11 einen Stanzbearbeitungskopf 21 aufweist, ist unterhalb der Werkstückauflage 16 ein Unterwerkzeug, insbesondere eine Stanzmatrize, vorgesehen, welche zum Stanzbearbeitungskopf, insbesondere verfahrbar, ausgerichtet ist.

Die Bearbeitungsmaschine 11 weist an einer Stirnseite des Grundkörpers 14 eine Handlingseinrichtung 26 auf. Diese kann am Grundkörper 14 befestigt sein oder getrennt dazu angeordnet werden. Diese Handlingseinrichtung 26 umfasst eine Tragstruktur 27, welche zumindest eine Greifeinrichtung 28 aufnimmt. Durch diese Handlingseinrichtung 26 ist die zumindest eine Greifeinrichtung 28 oberhalb der Werkstückauflage 16 verfahrbar vorgesehen, um ein Werkstück 12, insbesondere ein plattenförmiges Rohmaterial, aus einer Beladestation 52 der Bearbeitungsmaschine 11 zuzuführen und auf der Werkstückauflage 16 aufzulegen. Diese Greifeinrichtung 28 ist innerhalb der Handlingseinrichtung 26 in die Beladestation 52 verfahrbar. Vorzugsweise werden in der Beladestation 52 Werkstücke in Form von plattenförmigen Rohmaterialien zur Bearbeitung in der Bearbeitungsmaschine bereitgestellt. Alternativ können auch bereits bearbeitete Werkstücke 12 in der Beladestation 52 bereitgestellt werden, sodass diese durch die Bearbeitungsmaschine 11 nach dem Überführen mit der Greifeinrichtung 28 weiter bearbeitet werden.

Die Greifeinrichtung 28 kann ein oder mehrere Teile 30 gleichzeitig aufnehmen.

Die Greifeinrichtung 28 ist des Weiteren in eine Entladestation 53 verfahrbar. Diese Entladestation 53 kann beispielsweise zwischen der Beladestation 52 und der Werkstückauflage 16 vorgesehen sein, sodass die Greifeinrichtung 28 mittels einer Linearbewegung sowohl in die Beladestation 52, in die Entladestation 53 und zur Werkstückauflage 16 verfahrbar ist. Weitere Anordnungsmöglichkeiten der Be- und/oder Entladestation 52, 53 zur Werkstückauflage 16 der Bearbeitungsmaschine sind ebenfalls möglich.

In der Entladestation 53 sind ein oder, wie im Ausführungsbeispiel dargestellt, mehrere Entladebereiche 54 vorgesehen. In jedem Entladebereich 54 ist beispielsweise eine Palette 55 oder ein Wagen oder ein Podest vorgesehen. Diese können ausgewechselt werden. In jedem Entladebereich 54 ist somit eine Lagerfläche 56 vorgesehen, deren Größe durch die Palette 55, den Wagen, das Podest oder dergleichen bestimmt ist. Durch die Greifeinrichtung 28 kann das bearbeitete Werkstück 30 von der Werkstückauflage 16 in die Entladestation 53 übergeführt und auf der Lagerfläche 56 abgelegt oder abgeworfen werden. Analog können auch Rest- oder Fehlerteile in der Entladestation 53 abgelegt werden. Dem zumindest einen Entladebereich 54 ist zumindest eine Erfassungseinrichtung 35, 36 zugeordnet. Diese zumindest eine Erfassungseinrichtung kann ortsfest zu dem zumindest einen Entladebereich 54 vorgesehen sein. Bevorzugt ist zumindest ein Traggestell 37 dem zumindest einen Entladebereich 54 zugeordnet, an welchem die zumindest eine Erfassungseinrichtung 35, 36 angeordnet ist. Diese einzelnen Erfassungseinrichtungen 35, 36 können in der Ausrichtung zum Entladebereich, insbesondere zur jeweiligen Lagerfläche 56 einer Palette 55, eines Podestes oder eines Wagens einstellbar sein. Eine erste Erfassungseinrichtung 35 ist bevorzugt vertikal oberhalb des Entladebereiches 54 vorgesehen, sodass vertikal von oben eine Erfassung der jeweiligen Lagerfläche 56 vorgesehen ist. Auch kann eine oder eine weitere Sensoreinrichtung an der Greifvorrichtung 28 vorgesehen sein. Des Weiteren ist vorteilhafterweise zumindest eine weitere Erfassungseinrichtung 36 dem Entladebereich 54 zugeordnet, welche seitlich zum Entladebereich 54 ausgerichtet ist. Vorteilhafterweise ist diese zumindest eine weitere Erfassungseinrichtung 36 horizontal beziehungsweise parallel zur Lagerfläche 56 ausgerichtet. Durch diese seitlich ausgerichtete Erfassungseinrichtung 36 kann eine Stapelhöhe von übereinandergestapelten Teilen 30 erfasst werden. Alternativ und/oder ergänzend kann auch zumindest eine Erfassungseinrichtung in einem perspektivischen Winkel von schräg oben auf die Lagerfläche 56 ausgerichtet sein, sodass durch diese zumindest eine Erfassungseinrichtung sowohl die freie Lagerfläche als auch die Stapelhöhe erfasst und ermittelt werden können. Die zumindest eine Erfassungseinrichtung 35, 36 kann als optische und/oder sensorische Messeinrichtung ausgebildet sein. Beispielsweise können Kameras oder Abstandssensoren sowie Radar oder dergleichen eingesetzt werden.

Die zumindest eine Erfassungseinrichtung ist bevorzugt derart zum zumindest einen Entladebereich 54 ausgerichtet, dass einerseits eine einfache Bestückung und Entnahme des oder der Entladebereiche durch Paletten 55, Podeste oder Wägen ermöglicht ist. Andererseits ist eine gute Zugänglichkeit durch die Greifvorrichtung 28 ermöglicht, um in den zumindest einen Entladebereich verfahren zu werden, um die Teile 30 abzulegen oder abzuwerfen.

Die Werkstückauflage 16 kann ein Tischsegment 33 aufweisen, welches gegenüber der Werkstückauflage nach unten abklappbar ist. Auch kann das Tischsegment nach unten absenkbar sein oder eine kombinierte Bewegung durchführen. Dadurch kann ein Ausschleusen von bearbeiteten Teilen oder Restteilen oder beiden ermöglicht sein.

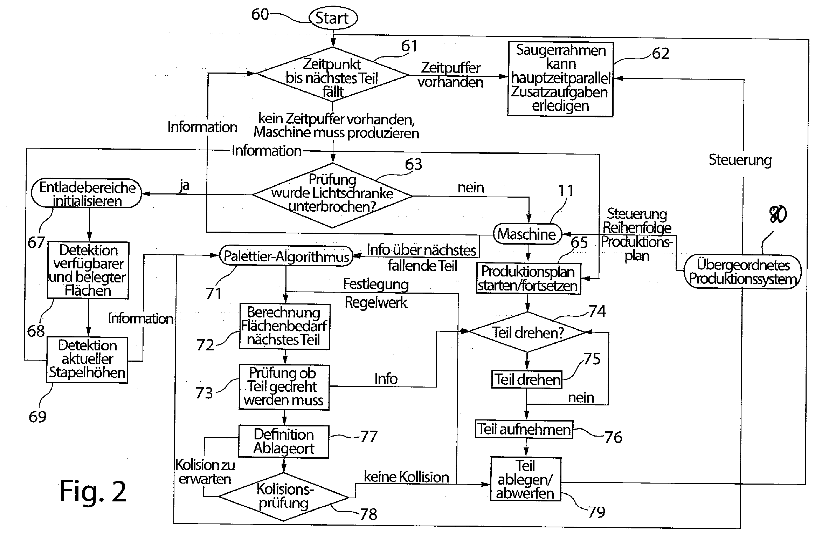

In Figur 2 ist ein schematisches Ablaufdiagramm dargestellt, anhand welchem die Steuerung der Bearbeitungsmaschine 11 sowie das Verfahren zur Palettierung von bearbeiteten Werkstücken 30 näher erörtert werden:

Zur Erörterung des Ablaufdiagrammes wird ein Startpunkt 60 gewählt, bei welchem die Bearbeitungsmaschine 11 Teile 30 produziert. Ein Programmdurchlauf wurde gestartet, und die Bearbeitungsmaschine 11 bearbeitet entsprechend den einzelnen im Programmdurchlauf festgelegten Parametern, beispielsweise ein plattenförmiges Rohteil 12, um ein oder mehrere Teile 30 herzustellen.

Während dieses Herstellungsprozesses wird gemäß Schritt 61 durch die Maschinensteuerung abgefragt, welcher Zeitraum verbleibt, bis das nächste Teil 30 fertiggestellt ist. Sofern hinreichend Zeit zur Verfügung steht, kann die Greifvorrichtung 28 gemäß Schritt 62 angesteuert werden, um während der Herstellung vom nächsten Teil weitere Zusatzaufgaben zu erledigen. Sofern kein Zeitpuffer mehr vorhanden ist, wird gemäß Schritt 63 abgefragt, ob eine Lichtschranke unterbrochen wurde. Diese Lichtschranke umgibt die Bearbeitungsmaschine 11, insbesondere die Bearbeitungsanlage 10, um den Arbeitsraum abzusichern, sodass ein Werker nicht unbeabsichtigt die Bearbeitungsanlage 10 betritt oder während des Betriebs die Bearbeitungsanlage 10 betritt.

Wurde die Lichtschranke nicht unterbrochen, setzt die Bearbeitungsmaschine 11 ihren Produktionsplan gemäß Schritt 65 fort oder startet diesen Produktionsplan gemäß dem der in der Maschinensteuerung abgespeicherten Programmdurchlauf.

Sofern in Schritt 63 festgestellt wurde, dass die Lichtschranke unterbrochen wurde, gilt es zu prüfen, ob und inwieweit im Entladebereich 54 Veränderungen erfolgt sind. Solche Änderungen können beispielsweise durch den Austausch von Paletten 55, Podesten oder Wägen erfolgen. Die Veränderungen können auch durch teilweises Absortieren von einzelnen Teilen 30 von der Lagerfläche 56 gegeben sein. Daraufhin werden die dem Entladebereich 54 zugeordneten Erfassungseinrichtungen 35, 36 in Schritt 67 initialisiert. Darauffolgend wird eine Abfrage von verfügbaren Lagerflächen 56 oder belegten Lagerflächen 56 gemäß Schritt 68 durchgeführt. Anschließend werden die aktuellen Stapelhöhen innerhalb der Lagerflächen 56 in Schritt 69 ermittelt.

Die daraus gewonnenen Daten werden einerseits dem Produktionsplan im Schritt 65 zugeführt. Andererseits werden diese gewonnenen Informationen beziehungsweise Daten einer Datenverarbeitungseinrichtung zugeführt, welche mit einem Palettieralgorithmus arbeitet. Die Auswertung dieser erfassten Informationen durch den Palettieralgorithmus erfolgt in Schritt 71. Gleichzeitig fließen in diesen Palettieralgorithmus Parameter und/oder Informationen von der Bearbeitungsmaschine 11, beispielsweise über das als nächstes fertiggestellte Teil 30, ein. Dabei können diese Daten eine Teileidentifikationsnummer, das Material, die Abmessung, den Zeitpunkt, den Kunden, die Höhe oder dergleichen umfassen.

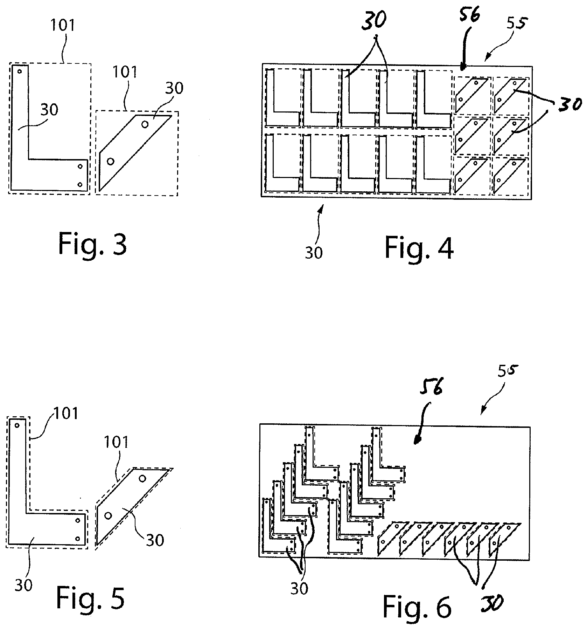

Durch den Palettieralgorithmus werden unter Berücksichtigung der vorstehend genannten Informationen Parameter für einen Flächenbedarf des abzulegenden Teils 30 in Schritt 72 errechnet. Dies erfolgt in Abhängigkeit einer anzuwendenden Schachtellogik. In den nachfolgenden Figuren 3 und 4 sowie den Figuren 5 und 6 sind zwei Beispiele erörtert.

In einem weiteren Schritt 73 wird geprüft, ob das abzulegende Teil 30 gedreht werden muss oder unmittelbar aus der Werkstückauflage 16 der Bearbeitungsmaschine entnommen und in dem Ablageort auf der Lagerfläche 56 abgelegt werden kann. Sofern ein Drehen des Teils erforderlich wird, erfolgt dies in der Bearbeitungsmaschine 11 gemäß Schritt 74. Das Teil 30 wird in der Bearbeitungsmaschine 11 gedreht (Schritt 75) oder es verbleibt in der ausgerichteten Lage, sofern ein Drehen nicht erforderlich ist. Darauffolgend wird durch die Bearbeitungsmaschine 11 das Signal ausgegeben, dass das Teil 30 gemäß Schritt 76 durch die Greifeinrichtung 28 ergriffen und von der Werkstückauflage 16 entfernt werden kann. Daraufhin wird das Teil 30 zum Ablageort verfahren. Dieser Ablageort wurde zwischenzeitlich durch den Palettieralgorithmus in Schritt 77 definiert. Vorteilhafterweise wird noch eine Kollisionsprüfung in Schritt 78 durchgeführt, sodass die Greifeinrichtung 28 beim Verfahren in den Entladebereich 54 nicht mit einem Stapel von Teilen 30 kollidiert, die bereits auf der Lagerfläche 56 abgelegt sind. Sofern durch die Kollisionsprüfung festgestellt wird, dass eine Kollision zu erwarten ist, werden der Ablageort und/oder die Art der Ablage des Teils in Schritt 77 nochmals neu definiert. Sobald keine Kollision gegeben ist, wird die Greifeinrichtung 28 zum Entladeort verfahren und das Teil 30 gemäß Schritt 79 abgelegt. Sofern bereits ein Stapel auf der Lagerfläche 56 vorhanden ist oder verschieden hohe Stapel von Teilen 30 auf der Lagerfläche 56 vorhanden sind und die Greifeinrichtung 28 deshalb das Teil 30 nicht ablegen kann, wird die Greifeinrichtung 28 oberhalb des vorgesehenen Lagerorts positioniert und das Teil 30 abgeworfen. Dadurch wird eine Kollision mit dem zumindest einen bereits bestehenden Stapel von Teilen 30 auf der Lagerfläche 56 vermieden. Anschließend fährt die Greifeinrichtung 28 wieder in eine Warteposition oder Ausgangsposition und steht für den darauffolgenden Palettiervorgang für ein Teil oder für Teile 30 bereit.

Die Greifeinrichtung 28 kann ein oder mehrere Teile 30 gleichzeitig ablegen und/oder abwerfen als auch aufeinanderfolgend die Teile 30 ablegen und/oder abwerfen.

Die Bearbeitungsmaschine 11 wird durch ein übergeordnetes Produktions-Programmsystem gemäß Schritt 80 mittels einer nicht näher dargestellten Maschinensteuerung gesteuert. In diesem übergeordneten Produktions-Programmsystem kann die Reihenfolge von verschiedenen Programmdurchläufen in Abhängigkeit einer Produktionsplanung hinterlegt sein. Gleichzeitig gibt dieses übergeordnete Produktionssystem Informationen beziehungsweise Daten und/oder Parameter für die herzustellenden Teile an den Palettieralgorithmus in Schritt 71 weiter. Zudem kann durch dieses übergeordnete Produktions-Programmsystem gemäß Schritt 80 auch die Greifeinrichtung 28 hauptzeitparallel für Zusatzaufgaben in Schritt 62 angesteuert werden.

In Figur 3 ist eine schematische Ansicht auf zwei Teile 30 dargestellt, die in der Geometrie voneinander abweichen. Jedes dieser Werkstücke 30 wird von einer Strichlinie 101 umgeben. Diese Strichlinie 101 bildet ein umschließendes Rechteck, welches eine Fläche aufspannt, die einer Schachtellogik zur Ablage der Teile 30 auf einer Lagerfläche 56 zugrundegelegt wird.

In Figur 4 ist eine schematische Ansicht auf die Lagerfläche 56 dargestellt, welche mehrere L-förmige Teile 30 und mehrere trapezförmige Teile 30 aufnimmt. Daraus ist ersichtlich, dass die Positionierung der einzelnen Teile 30 zueinander durch das Aneinanderreihen der umschließenden Rechtecke gemäß der jeweiligen Strichlinie 101 und nicht durch die Geometrie der Teile 30 selbst bestimmt ist. Der Palettieralgorithmus legt diese jeweilige Fläche des umschließenden Rechteckes für die erforderliche Lagerfläche 56 zugrunde, um einen Ablageort auf der Lagerfläche 56 zu ermitteln und zu bestimmen. Durch den Palettieralgorithmus kann für das jeweilige Teil 30 eine optimierte Anordnung und Ausrichtung für eine maximale Belegung der Lagerfläche 56 ermittelt werden.

In Figur 5 ist eine alternative Schachtellogik zu den Figuren 3 und 4 dargestellt. Das L-förmige Teil 30 sowie das trapezförmige Teil 30 werden jeweils durch eine Strichlinie 101 umgeben, die der Kontur beziehungsweise der Geometrie des Werkstückes folgt. Es wird somit eine Umhüllende gebildet, die der Schachtellogik zugrundegelegt wird. Ausgehend von der Schachtellogik auf Basis der Umhüllenden können die Teile 30 gemäß Figur 6 zueinander ausgerichtet und auf der Lagerfläche 56 abgelegt werden.

Ein Vergleich der Schachtelung der Teile 30 in Figur 4 und Figur 6 zeigt, dass bei der Schachtellogik auf Basis der Umhüllenden eine höhere Belegungsdichte von Teilen 30 auf der Lagerfläche 56 möglich ist.

## Patentansprüche

1. Verfahren zum Palettieren von Teilen (30) in einem oder in mehreren Entladebereichen (54), die einer Bearbeitungsmaschine (11) zugeordnet sind,
- bei dem das in der Bearbeitungsmaschine (11) bearbeitete Teil (30) mit einer Greifeinrichtung (28) in den Entladebereich (54) verfahren und an einem Ablageort auf einer Lagerfläche (56) im Entladebereich (54) positioniert wird, wobei,
- vor oder während dem Überführen des Teils (30) in den Entladebereich (54) die im Entladebereich (54) verfügbare Lagerfläche (56) mit zumindest einer Erfassungseinrichtung (35, 36) erfasst wird,
- wobei die erfassten Daten über die verfügbare Lagerfläche (56) an eine Datenverarbeitungseinrichtung in einer Steuerungseinrichtung der Bearbeitungsmaschine (11) weitergeleitet werden,
- dass in der Datenverarbeitungseinrichtung diese erfassten Daten über die verfügbare Lagerfläche (56) mit zumindest einem Parameter des zu palettierenden Teils (30) durch einen Palettieralgorithmus ausgewertet und der Ablageort auf der Lagerfläche (56) bestimmt werden, und
- wobei die Greifeinrichtung (28) durch die Steuerungseinrichtung zum ermittelten Ablageort innerhalb des Entladebereiches (54) verfahren und das Teil (30) auf der Lagerfläche (56) oder auf einem bereits palettierten Teil (30) abgelegt wird.

2. Verfahren nach Anspruch 1, **dadurch gekennzeichnet, dass** in dem Entladebereich (54) mit zumindest einer Erfassungseinrichtung (35, 36), die auf den Entladebereich (54) gerichtet ist, die verfügbare Lagerfläche (56) erfasst wird.

3. Verfahren nach Anspruch 1 oder 2, **dadurch gekennzeichnet, dass** die zumindest eine Erfassungseinrichtung (35) vertikal von oben auf die Lagerfläche (56) weisend und/oder die zumindest eine weitere Erfassungseinrichtung (36) seitlich zum Entladebereich (54), vorzugsweise parallel zur Lagerfläche (56), ausgerichtet werden.

4. Verfahren nach einem der vorhergehenden Ansprüche, **dadurch gekennzeichnet, dass** eine optische oder sensorische Messeinrichtung oder eine Messeinrichtung mit elektromagnetischen Wellen als Erfassungseinrichtung (35, 36) eingesetzt wird.

5. Verfahren nach einem der vorhergehenden Ansprüche, **dadurch gekennzeichnet, dass** bei einer erfassten Stapelhöhe von Teilen (30) auf einer Lagerfläche (56), die beim Ablegen des zu palettierenden Teils (30) mit der Greifeinrichtung (28) zu einer Kollision führt, durch den Palettieralgorithmus die Greifeinrichtung (28) zum Abwerfen des zu palettierenden Teils (30) oberhalb des Ablageortes auf der Lagerfläche (56) angesteuert wird.

6. Verfahren nach einem der vorhergehenden Ansprüche, **dadurch gekennzeichnet, dass** für den Palettieralgorithmus als Parameter zumindest die Materialdaten des zu palettierenden Teils (30), die zu erwartende Gesamt-Teilestückzahlje Programmdurchlauf, das Teilegewicht, die zu erwartende Produktionszeit je Teil (30) erfasst und/oder Daten des Teils (30) aus dem Bearbeitungsprogramm bereitgestellt werden.

7. Verfahren nach einem der vorhergehenden Ansprüche, **dadurch gekennzeichnet, dass** zu Beginn eines Programmdurchlaufs zur Bearbeitung des zumindest einen Teils (30) durch die Bearbeitungsmaschine (11) oder bei einem Wechsel des Programmdurchlaufs zur Bearbeitung des zumindest einen Teils (30) die im Entladebereich (54) verfügbare Lagerfläche (56) erfasst und darauffolgend das weitere Abstapeln der Teile (30) rechnerisch bestimmt werden.

8. Verfahren nach einem der Ansprüche 1 bis 6, **dadurch gekennzeichnet, dass** nach jeder Unterbrechung eines Programmdurchlaufs für die Bearbeitung des zumindest einen Teils (30) durch die Bearbeitungsmaschine (11) die verfügbare Lagerfläche (56) im Entladebereich (54) durch die zumindest eine Erfassungseinrichtung (35, 36) erfasst und darauffolgend das weitere Abstapeln der Teile (30) rechnerisch bestimmt werden.

9. Verfahren nach einem der vorhergehenden Ansprüche, **dadurch gekennzeichnet, dass** im Entladebereich (54) mehrere Lagerflächen (56) bereitgestellt und die Teile (30) auf die einzelnen Lagerflächen (56) nach Größe, Kundenauftrag, Priorität zum Auslieferungszeitpunkt und/oder nach Gut- und Fehlerteil sortiert werden.

10. Verfahren nach einem der vorhergehenden Ansprüche, **dadurch gekennzeichnet, dass** der Ablageort des oder der Teile (30) innerhalb der Lagerfläche (56) im Entladebereich (54) durch eine Schachtellogik über ein das Teil (30) umschließendes Rechteck oder über eine das Teil (30) Umhüllende durch den Palettieralgorithmus bestimmt wird.

11. Verfahren nach einem der vorhergehenden Ansprüche, **dadurch gekennzeichnet, dass** vor dem Ablegen des Teils (30) an dem Ablageort in der Lagerfläche (56) die Orientierung erfasst und in der Bearbeitungsmaschine (11) oder durch die Greifeinrichtung (28) gedreht und ausgerichtet wird.

12. Verfahren nach einem der vorhergehenden Ansprüche, **dadurch gekennzeichnet, dass** die Teile (30) hauptzeitparallel in den Entladebereich (54) palettiert werden.

13. Verfahren nach einem der vorhergehenden Ansprüche, **dadurch gekennzeichnet, dass** während dem Palettieren der Teile (30) auf der Lagerfläche (56) im Entladebereich (54) die Stapelhöhe durch den Palettieralgorithmus und/oder durch die zumindest eine Erfassungseinrichtung (35, 36) und/oder eine weitere Sensoreinrichtung an der Greifvorrichtung (28) überwacht wird.

14. Verfahren nach einem der vorhergehenden Ansprüche, **dadurch gekennzeichnet, dass** das Palettieren von Teilen (30) unabhängig von einem Programmdurchlauf zur Bearbeitung von Teilen (30) in der Bearbeitungsmaschine (11) angesteuert wird.

## Claims

1. A method of palletising parts (30) in one or several discharge zones (54) which are associated with a processing machine (11),
- in which such part (30), once it has been processed in the processing machine (11), is moved to the discharge zone (54) by means of a gripping device (28) and, at a depositing location, is positioned onto a storage surface (56) in the discharge zone (54),
- wherein the storage surface (54) available in said discharge zone (56) is detected by means of at least one detection device (35, 36) prior to, or concurrently with, the transfer of the part (30) to said discharge zone (54),
- wherein the detected data concerning the available storage surface (56) is transmitted to a data processing device provided within a control device of the processing machine (11),
- wherein said detected data concerning the available storage surface (56) is evaluated, together with at least one parameter of the part (30) to be palletised, by a palletising algorithm in the data processing device, and the depositing location on the storage surface (56) is determined accordingly, and
- the gripping device (28) is moved to the identified depositing location within the discharge zone (54) by the control device, and the part (30) is deposited onto the storage surface (56) or on top of a previously palletised part (30).

2. The method as claimed in claim 1, **characterised in that** the storage surface (56) available in the discharge zone (54) is detected by means of at least one detection device (35, 36) which is directed towards said discharge zone (54).

3. The method as claimed in claim 1 or 2, **characterised in that** the at least one detection device (35) is oriented in such a manner as to face towards the storage surface (56) vertically from above, and/or in that the at least one other detection device (36) is oriented laterally with respect to the discharge zone (54), preferably parallel to the storage surface (56).

4. The method as claimed in any of the preceding claims, **characterised in that** an optical or sensor-based measuring device or a measuring device using electromagnetic waves is employed as a detection device (35, 36).

5. The method as claimed in any of the preceding claims, **characterised in that** when a detected height of stacked parts (30) on a storage surface (56) is such that depositing the part (30) to be palletised by means of the gripping device (28) would lead to a collision, the palletising algorithm activates and controls the gripping device (28) to drop the part (30) to be palletised above the depositing location on the storage surface (56).

6. The method as claimed in any of the preceding claims, **characterised in that** at least the material data of the part (30) to be palletised, the expected total number of parts per programme cycle, the part weight, the expected production time per part (30) are detected as parameters for the palletising algorithm and/or **in that** data of the part (30) are retrieved from the processing programme.

7. The method as claimed in any of the preceding claims, **characterised in that** at the beginning of a programme cycle for processing the at least one part (30) by the processing machine (11) or upon a change of the programme cycle for processing the at least one part (30), the storage surface (56) available in the discharge zone (54) is detected and the further stacking of the parts (30) is subsequently determined by way of calculation.

8. The method as claimed in any one of claims 1 to 6, **characterised in that** after each interruption of a programme cycle for processing the at least one part (30) by the processing machine (11), the storage surface (56) available in the discharge zone (54) is detected by means of the at least one detection device (35, 36), and the further stacking of the parts (30) is subsequently determined by way of calculation.

9. The method as claimed in any of the preceding claims, **characterised in that** several storage surfaces (56) are provided in the discharge zone (54) and the parts (30) will be sorted into the individual storage surfaces (56) depending on size, customer order, delivery priority and/or depending on their nature of being either good parts or rejects.

10. The method as claimed in any of the preceding claims, **characterised in that** the depositing location of the part(s) (30) within the storage surface (56) in the discharge zone (54) is determined by the palletising algorithm using a stacking logic based on a bounding rectangle enclosing the part (30) or on an envelope enclosing the part (30).

11. The method as claimed in any of the preceding claims, **characterised in that** before the part (30) is deposited at the depositing location within the storage surface (56), its orientation is detected and it is rotated and oriented in the processing machine (11) or by the gripping device (28).

12. The method as claimed in any of the preceding claims, **characterised in that** the palletising of the parts (30) in the discharge zone (54) is carried out in masked time.

13. The method as claimed in any of the preceding claims, **characterised in that** during the palletising of the parts (30) on the storage surface (56) within the discharge zone (54), the stacking height is monitored by the palletising algorithm and/or by the at least one detection device (35, 36) and/or by a further sensor device provided on the gripping device (28).

14. The method as claimed in any of the preceding claims, **characterised in that** the palletising of parts (30) is activated and controlled independently from a programme cycle for the processing of parts (30) within the processing machine (11).

## Revendications

1. Procédé destiné à palettiser des pièces (30) dans une ou plusieurs zones de déchargement (54) qui sont affectées à une machine d'usinage (11),
- lors duquel la pièce (30) usinée dans la machine d'usinage (11) est déplacée dans la zone de déchargement (54) et est positionnée dans un lieu de dépôt sur une surface de stockage (56) située dans ladite zone de déchargement (54) grâce à un dispositif de préhension (28),
- la surface de stockage (56) disponible dans la zone de déchargement (54) étant saisie grâce à au moins un dispositif de saisie (35, 36), et ce avant ou pendant le passage de la pièce (30) dans la zone de déchargement (54),
- les données saisies relatives à la surface de stockage (56) disponible étant transmises à un dispositif de traitement de données situé dans un dispositif de commande de la machine d'usinage (11),
- dans le dispositif de traitement de données, lesdites données saisies relatives à la surface de stockage (56) disponible étant évaluées et le lieu de dépôt sur la surface de stockage (56) étant déterminé par un algorithme de palettisation à l'aide d'au moins un paramètre de la pièce (30) à mettre sur palette, et
- le dispositif de préhension (28) étant déplacé par le dispositif de commande jusqu'au lieu de dépôt déterminé à l'intérieur de la zone de déchargement (54) et la pièce (30) étant déposée sur la surface de stockage (56) ou sur une pièce (30) préalablement mise sur palette.

2. Procédé selon la revendication 1, **caractérisé en ce que** la surface de stockage (56) disponible dans la zone de déchargement (54) est saisie grâce à au moins un dispositif de saisie (35, 36) qui est orienté sur ladite zone de déchargement (54).

3. Procédé selon la revendication 1 ou 2, **caractérisé en ce que** ledit au moins un dispositif de saisie (35) est orienté sur la surface de stockage (56) de manière verticale à partir du haut, et/ou **en ce que** ledit au moins un autre dispositif de saisie (36) est orienté de manière latérale à la zone de déchargement (54), de préférence de manière parallèle à la surface de stockage (56).

4. Procédé selon l'une quelconque des revendications précédentes, **caractérisé en ce qu'**un dispositif de mesure optique ou par capteur ou un dispositif de mesure à ondes électromagnétiques est utilisé en tant que dispositif de saisie (35, 36).

5. Procédé selon l'une quelconque des revendications précédentes, **caractérisé en ce que** lorsqu'une pile de pièces (30) sur une surface de stockage (56) présente une hauteur saisie qui entraîne une collision avec le dispositif de préhension (28) lorsque celui-ci dépose la pièce (30) à mettre sur palette, le dispositif de préhension (28) est activé par l'algorithme de palettisation de manière à lâcher ladite pièce (30) à mettre sur palette au-dessus du lieu de dépôt prévu sur la surface de stockage (56).

6. Procédé selon l'une quelconque des revendications précédentes, **caractérisé en ce qu'**au moins les données relatives au matériau de la pièce (30) à mettre sur palette, le nombre total de pièces prévu par cycle de programme, le poids de la pièce, le temps de production prévu par pièce (30) sont saisis et/ou des données relatives à la pièce (30) qui proviennent du programme d'usinage sont fournies en tant que paramètres pour l'algorithme de palettisation.

7. Procédé selon l'une quelconque des revendications précédentes, **caractérisé en ce qu'**au début d'un cycle de programme destiné à l'usinage de ladite au moins une pièce (30) par la machine d'usinage (11) ou lors d'un changement du cycle de programme destiné à l'usinage de ladite au moins une pièce (30), la surface de stockage (56) disponible dans la zone de déchargement (54) est saisie et qu'ensuite l'empilage des pièces (30) est déterminé par calcul.

8. Procédé selon l'une quelconque des revendications 1 à 6, **caractérisé en ce qu'**après chaque interruption d'un cycle de programme destiné à l'usinage de ladite au moins une pièce (30) par la machine d'usinage (11), la surface de stockage (56) disponible dans la zone de déchargement (54) est saisie par ledit au moins un dispositif de saisie (35, 36) et qu'ensuite l'empilage des pièces (30) est déterminé par calcul.

9. Procédé selon l'une quelconque des revendications précédentes, **caractérisé en ce que** plusieurs surfaces de stockage (56) sont mises à disposition dans la zone de déchargement (54) et que les pièces (30) sont réparties par triage sur les différentes surfaces de stockage (56) en fonction de la taille, de la commande du client, de l'ordre de priorité des dates de livraison et/ou selon qu'il s'agit d'une pièce bonne ou d'une pièce défectueuse.

10. Procédé selon l'une quelconque des revendications précédentes, **caractérisé en ce que** le lieu de dépôt de la pièce ou des pièces (30) à l'intérieur de la surface de stockage (56) située dans la zone de déchargement (54) est déterminé par l'algorithme de palettisation grâce à une logique d'emboîtement sur la base d'un rectangle qui entoure la pièce (30) ou d'une ligne enveloppante qui entoure ladite pièce (30) .

11. Procédé selon l'une quelconque des revendications précédentes, **caractérisé en ce qu'**avant que la pièce (30) ne soit déposée dans le lieu de dépôt prévu sur la surface de stockage (56), son orientation est saisie et que ladite pièce est tournée ou orientée dans la machine d'usinage (11) ou grâce au dispositif de préhension (28).

12. Procédé selon l'une quelconque des revendications précédentes, **caractérisé en ce que** les pièces (30) sont palettisées dans la zone de déchargement (54) en temps masqué.

13. Procédé selon l'une quelconque des revendications précédentes, **caractérisé en ce que** pendant la palettisation des pièces (30) sur la surface de stockage (56) située dans la zone de déchargement (54), la hauteur de la pile est surveillée par l'algorithme de palettisation et/ou par ledit au moins un dispositif de saisie (35, 36) et/ou par un autre dispositif capteur prévu sur le dispositif de préhension (28) .

14. Procédé selon l'une quelconque des revendications précédentes, **caractérisé en ce que** la palettisation de pièces (30) est activée indépendamment d'un cycle de programme destiné à l'usinage de pièces (30) dans la machine d'usinage (11).
